# EUROPÄISCHE PATENTSCHRIFT

(11) **EP 3 989 700 B1**
(45) Veröffentlichungstag und Bekanntmachung des Hinweises auf die Patenterteilung: **04.09.2024**
(21) Anmeldenummer: 20739254.9
(22) Anmeldetag: 24.06.2020
(51) Int. Cl.: A01C 5/06, A01C 7/04, A01C 7/20

(54) **LANDWIRTSCHAFTLICHE SÄMASCHINE MIT FLEXIBEL-LÄNGENVERÄNDERLICHER FÖRDERLEITUNG**
AGRICULTURAL SOWING MACHINE WITH A FLEXIBLE, LENGTH-VARIABLE SEED PIPE
SEMOIR AGRICOLE AVEC UN TUBE DE SEMENCE FLEXIBLE ET DE LONGUEUR VARIABLE

(30) Priorität: 26.06.2019 DE 102019117247
(43) Veröffentlichungstag der Anmeldung: 04.05.2022
(73) Patentinhaber: LEMKEN GmbH & Co. KG, 46519 Alpen (DE)
(72) Erfinder: BERGERFURTH, Dennis, 46459 Rees (DE); GOTZEN, Christian, 41751 Viersen (DE)
(86) Internationale Anmeldenummer: PCT/DE2020/100539
(87) Internationale Veröffentlichungsnummer: WO 2020/259761

(56) Entgegenhaltungen:
- WO-A1-2008/107454
- WO-A1-2009/043853
- DE-A1- 2 900 682
- DE-A1- 3 416 219
- US-A- 745 671
- US-B1- 6 308 645

## Beschreibung

Die vorliegende Erfindung bezieht sich auf eine landwirtschaftliche Sämaschine mit einem Maschinenrahmen und einer Mehrzahl von nebeneinander beweglich am Maschinenrahmen angeordneten Drilleinheiten und Saatgutvereinzelungsvorrichtungen, wobei die Drilleinheiten zumindest einen Furchenöffner, eine Förderleitung zur Beförderung des Saatguts von der Saatgutvereinzelungsvorrichtung zu einer Ablagezone mit einer bodennah angeordneten Abgabeöffnung und ein Andruckelement aufweisen, der zumindest eine Furchenöffner, die Abgabeöffnung und das Andruckelement in dieser Arbeitsabfolge zueinander in der Drilleinheit angeordnet sind, und die Saatgutvereinzelungsvorrichtung ohne eine mechanisch-starre Verbindung mit einem Bauteil einer Drilleinheit beweglich mit dem Maschinenrahmen verbunden ist, wobei die Förderleitung zwischen der Saatgutvereinzelungsvorrichtung und der Abgabeöffnung längenveränderlich ausgebildet ist, indem die Förderleitung zumindest in einem Abschnitt aus einem elastischen Material hergestellt ist.

Aus der Schrift US 5,603,269 ist eine Sämaschine bekannt, bei der die Saatgutvereinzelungsvorrichtung starr mit dem Maschinenrahmen verbunden ist. Da die Drilleinheiten beweglich am Maschinenrahmen befestigt sind, können sie Unebenheiten des Bodens, die sie während der Arbeit der Sämaschine überfahren, in vertikaler Richtung folgen und auch bei einem Fremdkörperkontakt nach oben hin ausweichen. Wegen der fehlenden Koppelung mit den Drilleinheiten übertragen sich die kontinuierlichen Höhenbewegungen der Drilleinheiten nicht auf die Saatgutvereinzelungsvorrichtung. Da sie deshalb während des Betriebs der Sämaschine weniger von Stößen erschüttert wird, bleibt die Vereinzelung in der Saatgutvereinzelungsvorrichtung vergleichsweise genau. Als Nachteil hat sich aber erwiesen, dass die Förderleitungen sehr lang ausgebildet sein müssen, um die Bewegungen zwischen den Drilleinheiten und der Saatgutvereinzelungsvorrichtung ausgleichen zu können. Aus den langen Förderleitungen und deren Bewegungen ergeben sich Laufwegdifferenzen des Saatguts, die zu einer ungenauen Saatgutablage führen. Auch verformt sich die Förderleitung ständig, was ebenfalls das Ablageergebnis beeinträchtigt.

In der Schrift US 4,074,830 ist eine andere Sämaschine offenbart, in der die Saatgutvereinzelungsvorrichtung starr mit der Drilleinheit verbunden ist. Die Förderleitung zwischen der Saatgutvereinzelungsvorrichtung und der Drilleinheit kann kürzer ausgeführt werden. Durch die ständigen Vertikalbewegungen der zugehörigen Drilleinheit ist die Saatgutvereinzelungsvorrichtung allerdings ständigen Stößen und Schlägen ausgesetzt, die zu Fehlern bei der Saatgutvereinzelung in der Saatgutvereinzelungsvorrichtung und damit Fehlstellen von Saatgutkörnern in der ausgelegten Saatgutreihe führen.

In der Schrift WO 2009/043853 A1 ist eine gattungsgemäße Sämaschine offenbart, bei denen die Drilleinheit und der Saatgutbehälter mit der daran befestigten Saatgutvereinzelungsvorrichtung beide schwenkbeweglich mit dem Maschinenrahmen verbunden sind. Die Drilleinheit und der Saatgutbehälter sind nicht durch eine feste Verbindung miteinander gekoppelt, so dass sie sich bei Vertikalbewegungen der Drilleinheit nicht gleichsinnig und miteinander fest gekoppelt auf- und abwärts bewegen. Bei diesen Sämaschinen sind die Förderleitungen abschnittweise unterbrochen, so dass die Saatgutkörner in diesen Abschnitten nicht geführt werden. Um den variablen Längenabstand zwischen den einzelnen Rohrabschnitten der Förderleitung bei Relativbewegungen zwischen der Drilleinheit und der Saatgutvereinzelungsvorrichtung ausgleichen zu können, ist in einem Ausführungsbeispiel zwischen den Rohrabschnitten ein Faltenbalg offenbart, der die Längenunterschiede zwischen den Rohrabschnitten ausgleichen soll. Weitere Sämaschinen sind aus der, der DE 34 16219 A1, der US 745 671 A, der DE 29 00 682 A1, der WO 2008/107454 A1 sowie der US 6 308 645 B1 bekannt. Insgesamt stellt sich bei den aus dem Stand der Technik bekannten Lösungen das Problem, dass die aus der Abgabeöffnung austretenden Saatgutkörner möglichst genau auf einen Punkt auf, an oder vor das Andruckelement geschossen werden sollen, um Fehlablagen in der Saatgutreihe zu vermeiden. Wenn sich die Saatgutvereinzelungsvorrichtung und die Drilleinheit relativ zueinander bewegen, verändert sich die relative Lage der Förderleitung mit ihrer Abgabeöffnung im Verhältnis zur Drilleinheit, woraus sich unterschiedliche Auftreffpunkte des Saatgutes auf, an, vor oder auch neben dem Andruckelement ergeben. Zwar ist ein Längenausgleich in der Förderleitung durch einen Faltenbalg möglich, in den Falten können sich jedoch Saatgutkörner festsetzen, die dann nicht mehr taktgenau in der Säfurche abgelegt werden können. Bei der Passage des Faltenbalgs können Saatgutkörner zudem mit nach innen weisenden Kanten des Faltenbalgs oder anderen der Förderrichtung entgegen gerichteten Flächen des Faltenbalgs kollidieren, wodurch die Saatgutkörner aus ihrer Soll-Bewegungsbahn geworfen und so in ihrer Bewegungsbahn abgelenkt werden, so dass die präzise Ablage der Saatgutkörner gestört ist. Außerdem stört die Faltenstruktur die Luftströmung, mit der die Saatgutkörner durch die Förderleitung befördert werden. Im Bereich der Faltenstruktur entstehen Turbulenzen, die für sich bereits die Saatgutkörner aus ihrer gewünschten Bewegungsbahn werfen können.

Es ist die Aufgabe der vorliegenden Erfindung, bei der Saatgutablage die Ablagegenauigkeit, insbesondere die Einhaltung des Sollabstands der Saatgutkörner voneinander, zu verbessern und/oder die Zahl der Fehlstellen bei der Ausbringung des Saatguts zu verringern. Durch die präzisere Vereinzelung und Ablage der Saatgutkörner sowie die Verringerung von Fehlstellen im Boden soll die Fahrgeschwindigkeit der Sämaschine während der Aussaat erhöht werden. Die Förderleitung soll so ausgebildet sein, dass sie Längenunterschiede auszugleichen vermag, ohne dabei die Ablagegenauigkeit der Saatgutkörner zu beeinträchtigen.

Die Aufgabe wird durch eine Sämaschine gemäß Anspruch 1 gelöst.

Durch die längenveränderliche Ausbildung des aus einem elastischen Material hergestellten Abschnitts in Schlauchform kann sich die Förderleitung an den jeweiligen aktuellen Abstand zwischen der Saatgutvereinzelungsvorrichtung und der Drilleinheit anpassen. Das gilt insbesondere, wenn ein erstes Ende der Förderleitung mit der Saatgutvereinzelungsvorrichtung und ein zweites Ende der Förderleitung mit einer Maschinenkomponente der Drilleinheit fest verbunden ist. Durch die längenveränderliche Ausbildung ist die Förderleitung immer zumindest annähernd oder genau nur so lang, wie es zur Verbindung der Saatgutvereinzelungsvorrichtung mit der Drilleinheit jeweils erforderlich ist, indem sie sich bei Vertikalbewegungen der Saatgutvereinzelungsvorrichtung und der Drilleinheit mit dem längenveränderlichen Abschnitt an die jeweils benötigte Länge der Förderleitung anpasst. Durch die Anpassung der Länge der Förderleitung auf ein jeweiliges gerade benötigtes Maß, insbesondere wenn dieses Maß verkürzt ist, werden die hindurch beförderten Saatgutkörner weniger reibungsbedingt abgebremst, sie bewegen sich deshalb mit einer größeren Austrittsgeschwindigkeit aus der Abgabeöffnung heraus und haben dadurch eine geringere Verweilzeit in der Förderleitung. Die kürzere Förderleitung entspricht auch eher dem Ideal der direkten Verbindung zwischen der Saatgutvereinzelungsvorrichtung und der Drilleinheit; auch durch die kürzere Strecke, die die Saatgutkörner in der Förderleitung zurücklegen, ist die Verweilzeit der Saatgutkörner in der Förderleitung kürzer als bei längeren Förderleitungen. Durch die geringere Reibung und die kürzere Förderstrecke ergeben sich geringere leitungsbedingte Differenzen bei der Ablagegenauigkeit der Saatgutkörner.

Ein elastisches Material verfügt über die Eigenschaft des ausgewählten Werkstoffes, unter Krafteinwirkung seine Form zu verändern und bei Wegfall der einwirkenden Kraft in die Ursprungsform zurückzukehren. Als elastisches Material kommen hier beispielsweise Gummi oder geeignete elastische wie beispielsweise elastomere Kunststoffe in Betracht. Dieses Material ist ausreichend elastisch, um eine Vielzahl von Dehnungen und Kontraktionen über die Gebrauchsdauer der Sämaschine hinweg schadlos zu überdauern. Die Elastizität des elastisch ausgebildeten Abschnitts der Förderleitung sollte ausreichen, um die zwischen der Saatgutvereinzelungsvorrichtung und der Drilleinheit während des Betriebs der Sämaschine auftretenden unterschiedlichen Abstände ausgleichen zu können, ohne dass das elastische Material dabei die Grenze seines Elastizitätsbereichs erreicht. Dabei muss die Länge des Abschnitts nicht dem kürzest möglichen Abstand zwischen der Saatgutvereinzelungsvorrichtung und der Drilleinheit entsprechen, der Abschnitt kann auch kürzer oder länger sein. Das ist durch ein geeignetes Material und die entsprechende Dimensionierung der Wandstärken des elastischen Materials möglich. Der Abschnitt aus einem elastischen Material kann anstelle oder ergänzend zu einem anderen teleskopartig ausgebildeten Abschnitt der Förderleitung in der Sämaschine vorhanden sein, der dann einen Teil der Längenveränderung der Förderleitung zu kompensieren vermag.

Die Schlauchform des aus einem elastischen Material hergestellten Abschnitts zeichnet sich dadurch aus, dass es sich dabei um einen länglichen Hohlkörper handelt, dessen den Hohlraum seitlich umschließende Wandung sich in Förderrichtung des Abschnitts erstreckt und dabei den Förderweg der Luft und der Saatgutkörner begrenzt. Die dem Hohlraum zugewandte Innenoberfläche der Wandung eines Schlauches ist üblicherweise glatt gestaltet keine abrupten Durchmesseränderungen in Längsrichtung aufweist, wie dies bei einem Faltenbalg der Fall ist. Die Querschnittsform eines Schlauches ist häufig rund, der Schlauch kann aber auch eine ovale, tropfenförmige, drei- oder mehreckige oder sonstige beliebige Querschnittsform haben. Bei einem runden Schlauch ergibt sich eine zumindest annähernd zylindrische Form des Hohlraums, durch den die Saatgutkörner hindurch befördert werden. Die Raumform des Hohlraums kann sich verändern, wenn die Zuglast, die auf die Wandung einwirkt, kleiner oder größer als die aktuelle Zuglast ist. So kann sich eine zylindrische Grundform unter Einwirkung einer Zugkraft beispielsweise zu einer ovalen Form verändern.

Die Wandung muss nicht über ihre Länge hinweg eine gleichbleibende Dicke aufweisen, sondern kann Abschnitte aufweisen, in denen sich die Wandung über eine Teillänge hinweg verdickt oder verjüngt. Im stirnseitigen Anschlussbereich an andere benachbarte Abschnitte der Förderleitung kann die Wandung auch Anformungen aufweisen, durch die sich ein gleitender, möglichst stufenfreier Übergang von einem vorgeordneten Abschnitt der Förderleitung in den schlauchförmigen Abschnitt und aus diesem heraus in einen nachgeordneten Abschnitt der Förderleitung ergibt.

Die Schlauchform muss nicht zwingend formstabil sein, wenn sich der Abschnitt verlängert oder verjüngt, es genügt, wenn die Schlauchform bei jeder Länge, die die Förderleitung zwischen der Saatgutvereinzelungsvorrichtung und der Abgabeöffnung darzustellen hat, ihre Schlauchform zumindest im Wesentlichen beibehält. Kontraktionsbedingte Dehnungen und Schrumpfungen der Wandung und der Raumform des Schlauches sind dabei unwesentlich. Anders als bei Faltenbälgen verändert sich die räumliche Lage von Wandungsteilen im Verhältnis zur Bewegungsbahn von Saatgutkörnern durch den Abschnitt hindurch bei unterschiedlichen Zuglasten kaum.

Bei einer Schlauchform des aus einem elastischen Material hergestellten Abschnitts weist die Innenoberfläche dieses Abschnitts keine Flächen auf, die durch ihre Form und Ausrichtung einen auf die Saatgutkörner wirkenden Störimpuls ausüben, die die Saatgutkörner aus der durch die Förderleitung vorgegebenen allgemeinen Bewegungsbahn bewegen. Dadurch werden insbesondere Störungen im Gutfluss der Saatgutkörner vermieden. Bei der durch die Förderleitung vorgegebenen allgemeinen Bewegungsbahn handelt es sich um die Bewegungsbahn, in der sich ein Saatgutkorn bewegt, wenn es der von der Förderleitung vorgegebenen allgemeinen Bewegungsbahn folgt. Die allgemeine Bewegungsbahn ist die Trajektorie, die sich ergibt, wenn das Saatgutkorn ohne besondere Ablenkungen der Raumform der Innenoberfläche der Förderleitung als Resultat der auf das Saatgutkorn einwirkenden physikalischen Kräfte wie beispielsweise Gewicht, Schwerkraft, Geschwindigkeit, Reibung, Strömungsgeschwindigkeit der umgebenden Luft, Luftwiderstand des Saatgutkorns und dergleichen, folgt. Die Trajektorie kann dabei in einzelnen Abschnitten einen geraden oder bogenförmigen Verlauf einnehmen, sie ist aber frei von scharfen Umlenkungen, Sprüngen und Versatzen.

Als Flächen, die durch ihre Form und Ausrichtung einen auf die Saatgutkörner wirkenden Störimpuls ausüben, sind solche Flächen anzusehen, die die Bewegung der Saatgutkörner von der Förderleitung vorgegebenen allgemeinen Bewegungsbahn ableiten, so dass sich für das diese Fläche berührende Saatgutkorn eine von der allgemeinen Bewegungsbahn abweichende Bewegungsbahn einstellt. Der Störimpuls kann ein Saatgutkorn in eine Richtung schräg oder quer zur allgemeinen Bewegungsbahn ablenken, der Störimpuls kann die tatsächliche Bewegungsbahn in ihrem vertikalen Verlauf verändern, oder es treten gemischt wirkende Störimpulse auf. Die Störimpulse können insbesondere durch Materialvorsprünge im Bereich von Faltkanten von Faltenbälgen oder Wulstkanten von gerundeten Übergängen gefalteter Materialreserven auftreten. Durch die Störimpulse können die in der Förderleitung bewegten Saatgutkörner abgebremst werden, sie können verspringen und stoßen dann noch ein- oder mehrfach gegen die Innenwand der Förderleitung, woraus sich unkontrollierte Bewegungen ergeben, oder sie geraten in eine schlingernde Bewegung. Alle diese von der allgemeinen Bewegungsbahn abweichenden Bahnverläufe bewirken, dass ein sich solcherart bewegendes Saatgutkorn nicht mehr präzise an dem Ort und in dem zeitlichen Takt in der Säfurche abgelegt werden kann, die für eine genaue Saatgutablage erforderlich wäre.

Die Zahl der Fehlstellen bei der Ablage der Saatgutkörner ist mit der längenveränderlichen Leitung geringer. Die Fördergeschwindigkeit der durch die Förderleitung beförderten Saatgutkörner ist homogener und weist geringere Schwankungen zwischen einzelnen Saatgutkörnern auf, was insgesamt höhere Fördergeschwindigkeiten ermöglicht. Durch die höhere Fördergeschwindigkeit der Saatgutkörner können diese auch bei höheren Fahrgeschwindigkeiten der Sämaschine noch ausreichend präzise in den Boden abgelegt werden.

Weil es bei der erfindungsgemäßen Ausgestaltung der Förderleitung nicht mehr erforderlich ist, die Saatgutvereinzelungsvorrichtung und die Drilleinheit direkt und fest miteinander zu koppeln, um kurze Förderleitungen realisieren zu können, werden vertikale Stoßbewegungen, die die Drilleinheit ausführt, nicht mehr auf die Saatgutvereinzelungsvorrichtung übertragen. Vertikale Stoßbewegungen führen auch nicht mehr dazu, dass sich der freie Querschnitt der Förderleitung durch sich ein- oder ausfaltende Wandungsteile und Knickkanten verändert. Solche Bewegungen bei herkömmlichen Faltenbälgen können Saatgutkörner sogar völlig stoppen, was direkt zu einer Fehlablage dieses Saatgutkorns führen würde. Die Saatgutvereinzelungsvorrichtung kann dadurch auch unter günstigeren Betriebsbedingungen betrieben werden, was sich positiv auf die Vereinzelungsqualität auswirkt.

Ein weiterer Vorteil der Erfindung ist darin zu sehen, dass die Saatgutablage durch die Abgabeöffnung der Förderleitung immer in einer räumlichen Lage erfolgt, in der die Abgabeöffnung in einer annähernd gleichen Position zum Andruckelement bleibt. Indem sich die Länge der Förderleitung verändert, die räumliche Position der Abgabeöffnung relativ zum Andruckelement aber gleich bleibt, ergeben sich gleichbleibende Flugbahnen des durch die Förderleitung beförderten Saatgutes im Verhältnis zum Andruckelement und damit eine annähernd gleich bleibende Ablage und Andruck des Saatgutes in den Boden.

Insgesamt addieren sich die vorstehend beschriebenen Effekte zu einer Mehrleistung der Sämaschine. Sie kann mit einer höheren Fahrgeschwindigkeit und einer gesteigerten Ablagegenauigkeit betrieben werden.

Wenn einleitend davon die Rede ist, dass die Saatgutvereinzelungsvorrichtung beweglich am Maschinenrahmen angeordnet ist, so bedeutet das nicht, dass diese als einziges Bauteil beweglich mit dem Maschinenrahmen verbunden sein muss. Die Saatgutvereinzelungsvorrichtung kann auch ein Bestandteil einer Bauteilgruppe sein, beispielsweise kombiniert mit einem Vorratsbehälter. Die die Saatgutvereinzelungsvorrichtung enthaltende Bauteilgruppe ist dann zusammen mit der Saatgutvereinzelungsvorrichtung beweglich mit dem Maschinenrahmen verbunden.

Wenn einleitend von der beweglichen Verbindung der Drilleinheit mit dem Maschinenrahmen die Rede ist, so ist auch das so zu verstehen, dass auch nur einzelne Teile der Drilleinheit oder jedes Teil der Drilleinheit für sich beweglich mit dem Maschinenrahmen verbunden sein können.

Wenn in dieser Beschreibung von einer Drilleinheit die Rede ist, so muss diese nicht zwingend als eine einzige Baugruppe ausgebildet sein. Der Begriff ist funktional und als Sammelbegriff für die Kernkomponenten mit den Maschinenteilen Furchenöffner, Förderleitung und Andruckelement zu verstehen, mit denen die Säfurche aufgerissen und danach die Saatgutkörner in die Säfurche eingelegt und darin angedrückt werden. Es können noch zusätzliche Maschinenteile diesen Kernkomponenten vor- und/oder nachgeordnet sein, die Hilfsfunktionen ausführen, wie Räder zur Höhenführung, Zustreichbleche oder -walzen, Stellelemente, Rahmenteile, Antriebe und dergleichen. Die zur Drilleinheit gehörenden Maschinenteile können auch jedes für sich mit dem Maschinenrahmen verbunden sein, oder ein Maschinenteil ist für sich in der Sämaschine angeordnet und die anderen Maschinenteile bilden eine Baugruppe. Die Kernkomponenten der Drilleinheit können jeweils für sich, teilweise miteinander kombiniert oder gemeinsam in einem Rahmen beweglich mit dem Maschinenrahmen verbunden sein.

Gleichwirkend und austauschbar zu einem als Andruckrolle ausgebildeten Andruckelement ist auch ein Streichblech oder ein vergleichbares Maschinenelement, mit dem das aus der Förderleitung ausgeschossene Saatgut in den Boden gedrückt wird. Die Drilleinheit kann so ausgestaltet sein, dass der Furchenöffner und das Andruckelement in einem gemeinsamen starren oder beweglichen Rahmen gehalten sind; der Furchenöffner und das Andruckelement können aber auch unabhängig voneinander beweglich mit dem Maschinenrahmen verbunden sein, so dass sich diese unabhängig voneinander oder gelenkig gekoppelt miteinander bewegen können.

Einer Drilleinheit können ein einzelner, aber auch mehrere Furchenöffner zugeordnet sein. Die Furchenöffner können einzeln oder paarweise angeordnet sein. Die Furchenöffner können als ein feststehendes Schar oder als eine rotierende Scheibe oder doppelte rotierende Scheiben in einer V-förmigen, in Fahrtrichtung gepfeilten Anordnung ausgebildet sein.

Nach einer Ausgestaltung der Erfindung ist die Innenoberfläche des aus einem elastischen Material hergestellten Abschnitts nicht durch Materialfaltungen und/oder Welligkeiten unterbrochen. Materialfaltungen stören besonders die Bewegung von Saatgutkörnern durch eine Förderleitung. Der Entfall solcher Materialfaltungen und/oder Welligkeiten verhindert Störungen während einer Förderung von Saatgutkörnern durch die Förderleitung.

Nach einer Ausgestaltung der Erfindung weist der aus einem elastischen Material hergestellte Abschnitt über seine Länge hinweg eine zumindest annähernd gleich bleibende Querschnittsform des Innenraums auf. Bei einem zumindest annähernd gleich bleibenden Querschnittsform werden störende Einflüsse auf die Bewegungsbahn von Saatgutkörnern vermieden. Eine zumindest annähernd gleich bleibende Querschnittsform ist gegeben, wenn sich die Querschnittsform um maximal 20 % nach einer weiteren Ausführungsform um weniger als 10 % in einer Dimension verändert.

Nach einer Ausgestaltung der Erfindung beträgt das Verhältnis einer Veränderung des Durchmessers des schlauchförmigen Abschnitts zur Veränderung einer Länge des schlauchförmigen Abschnitts bei seiner Dehnung maximal 20 Prozent, vorzugsweise kleiner 10 Prozent. Bei dieser Ausgestaltung ist der schlauchförmige Abschnitt so ausgelegt, dass sich der Durchmesser des schlauchförmigen Abschnitts bei einer Dehnung kaum verändert, die Länge jedoch erheblich, so dass sich die Elastizität besonders in Längsrichtung des schlauchförmigen Abschnitts auswirkt.

Nach einer Ausgestaltung der Erfindung weist der aus einem elastischen Material hergestellte Abschnitt zu den benachbarten Bereichen der Förderleitung mit seiner Querschnittsform des Innenraums vorzugsweise in Förderrichtung einen zumindest annähernd oder genau versatzfreien Übergang auf. Bauteilversatze im Übergangsbereich können den Durchgang von Saatgutkörnern erheblich stören. Durch einen zumindest annähernd oder genau versatzfreien Übergang werden solche Störungen vermieden. Unter einem zumindest annähernd versatzfreien Übergang ist ein Übergang zu verstehen, bei dem das Versatzmaß weniger als 10 % des Durchmessers der Förderleitung beträgt.

Gemäss der Erfindung besteht der aus einem elastischen Material hergestellte Abschnitt zumindest teilweise aus einem Gewebematerial. Das Gewebematerial kann beispielsweise ein kreuz-, netzartiges oder rhombenförmiges Webmuster aufweisen. Durch das Gewebematerial wird die Dauerfestigkeit des Abschnitts verbessert. Außerdem trägt das Gewebematerial dazu bei, das Elastizitätsverhalten des Abschnitts über die Lebensdauer hinweg auch einem gleichmäßigen Niveau zu halten.

Nach einer Ausgestaltung der Erfindung ist die Förderleitung zumindest in einem Abschnitt biegsam ausgebildet. Der biegsame Abschnitt kann dabei dem elastischen Abschnitt entsprechen, er kann aber insbesondere auch in einem Abschnitt außerhalb des elastischen Abschnitts ausgebildet sein. So kann die Förderleitung in dem nicht-elastischen Abschnitt, beispielsweise auch in einem Bogen der Förderleitung, zusätzlich Lageänderungen der Förderleitung, welche sich durch die Längenänderung des elastischen Abschnitts ergeben, kompensieren.

Nach einer Ausgestaltung der Erfindung ist die Förderleitung zumindest in einem Abschnitt innerhalb einer Biegeebene, welche parallel zu einer Bewegungsebene der Drilleinheit zum Maschinenrahmen steht, biegsam ausgebildet. Bei dieser Ausgestaltung steht die Biegeebene also vertikal und längs in Fahrtrichtung. Bei dieser Ausführung findet also nur eine Biegung in einer zweidimensionalen Ebene und nicht im dreidimensionalen Raum statt. Hierdurch wird der Einfluss der Biegung der Förderleitung auf eine außermittige Kornablage im Furchenquerschnitt verringert oder vermieden.

Nach einer Ausgestaltung der Erfindung ist der aus einem elastischen Material hergestellte Abschnitt der Förderleitung bei einem mittleren Abstand der Saatgutvereinzelungsvorrichtung von der Drilleinheit vorzugsweise in seiner Dehnrichtung gespannt gehalten. In der Dehnrichtung ändert sich die Länge des Schlauches elastisch. So kann der Abschnitt der Förderleitung beispielsweise bei einer maximalen Elastizität von 50 mm innerhalb der Grenzen des Elastizitätsbereichs in dieser Stellung der Saatgutvereinzelungsvorrichtung und der Drilleinheit zu 25 mm im Verhältnis zu seiner Länge in einem entspannten Zustand auseinandergezogen sein. Der schlauchförmige Abschnitt dient auf diese Weise auch als ein Feder-/Dämpferelement, welcher auf die Bewegungen der Saatgutvereinzelungseinrichtung einwirkt. Zum Aufbringen der Vorspannung auf den schlauchförmigen Abschnitt kann diesem zumindest mittelbar - direkt oder über eine Hebelanordnung - ein Energiespeicher zugeordnet sein, wobei dieser etwa die gleiche effektive Federrate wie der schlauchförmige Abschnitt aufweist. Damit wird ein Kräfte-Gleichgewicht hergestellt, welches die Saatgutvereinzelungsvorrichtung in einer Neutrallage hält, von welcher sie in eine obere bzw. untere Endlage schwingen kann.

In einer vorzugsweise vorgespannten Haltung sind die Innenoberflächen des Abschnitts der Förderleitung glatt und stören den Materialfluss durch die Förderleitung nicht. Auch die Luftströmung, mit der die Saatgutkörner durch die Förderleitung befördert werden, wird so nicht unnötig verwirbelt. Saatgutkörner können sich nicht während der Passage durch die Förderleitung in Materialtaschen ansammeln. Vorteilhaft sollte dabei der Innenquerschnitt nicht so weit verringert worden sein, dass es zu Störungen im Materialfluss des Saatgutes kommt.

Ein weiterer Vorteil eines elastischen Materials in einem Abschnitt der Förderleitung ist darin zu sehen, dass sich die Förderleitung in diesem elastischen Abschnitt unter Vorspannung immer gerade entlang des vorgegebenen Förderweges erstreckt. Dies entspricht vorzugsweise der Dehnrichtung. Durch die elastische Dehnbewegung des Materials während der Bewegungen der Saatgutvereinzelungsvorrichtung und der Drilleinheit wird auch möglichweise an der Innenwand des Abschnitts anhaftendes Material abgelöst, so dass der elastische Abschnitt der Förderleitung nicht so leicht verschmutzt oder gar verstopft.

Nach einer Ausgestaltung der Erfindung weist die Förderleitung in ihrem Verlauf auf den Innenoberflächen Erhebungen und/oder Vertiefungen auf, die im Wandungsbereich im Luftstrom turbulente Strömungen erzeugen. Die turbulenten Strömungen Luftstrom im Wandungsbereich bilden eine Art Luftpolster für das durch die Förderleitung beförderte Saatgut, wodurch dieses weniger stark über die Innenoberflächen gleitet und dadurch weniger stark reibungsbedingt abgebremst wird. Als Vertiefungen kommen beispielsweise flächig verteilte Dimples in Betracht, die in einem vorbeiströmenden Luftstrom turbulente Strömungen erzeugen. Auch können spoilerartige Erhebungen den Luftstrom führen und ihrerseits gezielte Turbulenzen erzeugen, die für das in der Förderleitung beförderte Saatgut ein Gaspolster bilden.

Nach einer Ausgestaltung der Erfindung ist die Förderleitung an ihrer dem Boden zugewandten Hälfte mit der beweglichen Lagerung des Furchenöffners verbunden. Eine Bewegung des Furchenöffners in vertikaler Richtung wird über die Verbindung der Förderleitung mit dem Furchenöffner auf die Förderleitung übertragen, so dass mit der Schwenkbewegung des Furchenöffners die Förderleitung in die Länge gezogen oder wieder verkürzt wird. Über die Bewegung des Furchenöffners in vertikaler Richtung wird also die Länge der Förderleitung kontinuierlich an den jeweiligen Längenbedarf angepasst.

Nach einer Ausgestaltung der Erfindung ist die Saatgutvereinzelungsvorrichtung über ein Feder-und/oder Dämpferelement mit der Drilleinheit gekoppelt. Über das Feder- und/oder Dämpferelement ist es möglich, Kraftspitzen, die bei sehr schnellen oder größeren Bewegungen der Saatgutvereinzelungsvorrichtung und der Drilleinheit auf die Förderleitung einwirken könnten, zu verringern. Das Feder-/Dämpferelement kann der elastische schlauchförmige Abschnitt der Förderleitung sein, es kann sich aber auch allein oder ergänzend um ein anderes entsprechendes Bauteil handeln. Dabei ist zu berücksichtigen, dass je nach Ausgestaltung der Sämaschine nicht nur die Saatgutvereinzelungsvorrichtung beweglich mit dem Maschinenrahmen verbunden ist, sondern die Saatgutvereinzelungsvorrichtung nur ein Bauteil einer Bauteilgruppe mit beispielsweise einem Vorratsbehälter sein kann, der - insbesondere, wenn er befüllt ist - erhebliche Kräfte entwickeln kann, wenn er sich bei der Arbeit der Sämaschine in vertikaler Richtung bewegt. Auch die Drilleinheit hat ein erhebliches Gewicht, das bei Bewegungen in vertikaler Richtung erhebliche Kräfte entwickelt, die dann auf die Förderleitung einwirken. Die unterschiedlichen Amplituden, mit denen sich die Saatgutvereinzelungsvorrichtung und die Drilleinheit mangels fester Verbindung bewegen, werden durch das Feder- und/oder Dämpferelement vorteilhaft verringert. Das kommt nicht nur der Lebensdauer der Förderleitung, sondern auch dem Arbeitsergebnis der Saatgutvereinzelungsvorrichtung und der Drilleinheit zugute.

Nach einer Ausgestaltung der Erfindung ist die Saatgutvereinzelungsvorrichtung über ein Feder-und/oder Dämpferelement mit dem Maschinenrahmen gekoppelt. Auch durch diese Maßnahme können die auf die Förderleitung einwirkenden Kraftspitzen verringert werden, indem das Feder-und/oder Dämpferelement die Amplituden glättet, mit denen sich die Saatgutvereinzelungsvorrichtung oder die Bauteilgruppe, deren Bestandteil die Saatgutvereinzelungsvorrichtung ist, bewegt.

Nach einer Ausgestaltung der Erfindung ist als Furchenöffner ein drehendes Scheibensäschar oder eine paarweise Anordnung von zwei Scheibensäscharen verwendet. Die drehenden Scheibensäschare zeigen ein sehr gutes Arbeitsergebnis. Sie sind gut geeignet, um eine Furche zu öffnen, in die das Saatgut durch die Förderleitung hineingeschossen werden kann. Die Rückseite des Scheibensäschars bildet einen geschützten Raum, in dem die Abgabeöffnung der Förderleitung angeordnet werden kann, ohne einem größeren Beschädigungs- oder Verstopfungsrisiko ausgesetzt zu sein.

Nach einer Ausgestaltung der Erfindung mündet die Abgabeöffnung der Förderleitung in einem Scharfuß. Der Scharfuß stützt die Förderleitung im Boden ab und schirmt die bevorzugt entgegen der Fahrtrichtung weisende Abgabeöffnung gegen Fremdkörper ab, die sich in der Säfurche befinden könnten. Durch den Scharfuß wird die Förderleitung stabilisiert gehalten, so dass das Saatgut genau in die Säfurche geschossen werden kann. Ein Scharfuß kann in der Sämaschine anstelle eines oder mehrerer Scheibenschare verwendet sein, um eine Säfurche im Boden zu öffnen, oder ein Scharfuß ist zusätzlich zu einem oder mehreren Scheibenscharen ausgebildet, um die Förderleitung abzustützen und gegen Anstöße an Fremdkörpern zu schützen.

Gemäß der Erfindung verfügt die Saatgutvereinzelungsvorrichtung über zumindest ein Dosierelement, welches das Saatgut mittels eines pneumatischen Druckgefälles dosiert oder vereinzelt. Das pneumatische Druckgefälle ist vorteilhaft, weil es die Saatgutkörner gut beschleunigt und in der Saatgutvereinzelungsvorrichtung verteilt. Die Vereinzelungsgenauigkeit ist bei pneumatischen Systemen sehr hoch.

Nach einer Ausgestaltung der Erfindung weist die Förderleitung Rohrabschnitte auf, die in zumindest einem Abschnitt teleskopartig ineinander beweglich ausgebildet sind. Bei zwei Rohrabschnitten, die ineinander beweglich sind, sind diese natürlich nur in einem Abschnitt teleskopartig ineinander beweglich. Bei mehr als zwei Rohrabschnitten, die die Förderleitung bilden, können natürlich auch mehrere Abschnitte ausgebildet sein, in denen die Rohrabschnitte ineinander beweglich sind. Über die teleskopartig ineinander beweglichen Rohrabschnitte kann die Länge der Förderleitung nach Bedarf verändert werden.

Der Ringspalt oder darin ausgebildete Lüftungsöffnungen zwischen den Teleskoprohren können dazu genutzt werden, um in einem stromabwärts von der Saatgutvereinzelungsvorrichtung gelegenen Abschnitt, in dem die Saatgutkörner von der Druckluft bereits ausreichend beschleunigt worden sind, Druckluft aus der Förderleitung austreten zu lassen, damit diese nicht die Ablage der Saatgutkörner im Boden stört und die Saatgutkörner dabei eventuell verbläst, ohne jedoch die Führung des Saatguts zu unterbrechen. Der Übergang der Rohrabschnitte kann auch dazu genutzt werden, gezielt Turbulenzen im Luftstrom zu erzeugen, um luftströmungsbedingte Ablagefehler zu verringern. Die Strömungsgeschwindigkeit der durch die Förderleitung hindurchströmenden Luft kann auch durch eine Querschnittserweiterung der Förderleitung zumindest auch im Bereich des Übergangs der Teleskoprohre reduziert werden.

Nach einer Ausgestaltung der Erfindung befindet sich ein ineinander beweglicher Abschnitt der Teleskoprohre aus der Seitenansicht der Sämaschine vollständig innerhalb des Kreisumfangs von Scheibenscharen oder ragt teilweise über diesen heraus. Wenn ein oder zwei Scheibenschare als Furchenöffner verwendet sind, die in einem Anstellwinkel zur Vorfahrtrichtung durch den Boden bewegt werden, bilden diese einen auf ihrer entgegen der Arbeitsrichtung liegenden Rückseite einen von dem oder den Scheibenscharen nach vorne hin abgeschirmten Raum, in dem die Förderleitung mit ihrer Abgabeöffnung geschützt angeordnet werden kann. Die Förderleitung kann in diesem Bereich nicht so leicht von Bodenmaterial, Steinen, Unkraut und anderen störenden Körpern getroffen, verstopft oder beschädigt werden, wie das ohne ein davor angeordnetes Scheibenschar der Fall wäre. Der ineinander bewegliche Abschnitt der Teleskoprohre wäre so weniger ausfallgefährdet.

Weitere Merkmale der Erfindung ergeben sich aus den Ansprüchen, den Figuren und der gegenständlichen Beschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar, soweit dem keine technischen Hinderungsgründe entgegenstehen.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Ansicht auf eine Sämaschine,
- Fig. 2:: eine Seitenansicht auf eine Förderleitung mit einem elastischen Abschnitt, bei dem der Abstand zwischen Saatgutvereinzelungsvorrichtung und Drilleinheit größer ist,
- Fig. 3:: eine Seitenansicht auf eine Förderleitung mit einem elastischen Abschnitt, bei dem der Abstand zwischen Saatgutvereinzelungsvorrichtung und Drilleinheit in einem mittleren Bereich liegt,
- Fig. 4:: eine Seitenansicht auf eine Förderleitung mit einem elastischen Abschnitt, bei dem der Abstand zwischen Saatgutvereinzelungsvorrichtung und Drilleinheit kleiner ist und
- Fig. 5:: einen teilweise freigestellten, elastischen Abschnitt der Förderleitung.
- Fig. 6: eine teilweise freigestellte Seitenansicht auf die bewegliche Anlenkung von Saatgutvereinzelungsvorrichtung und Drilleinheit

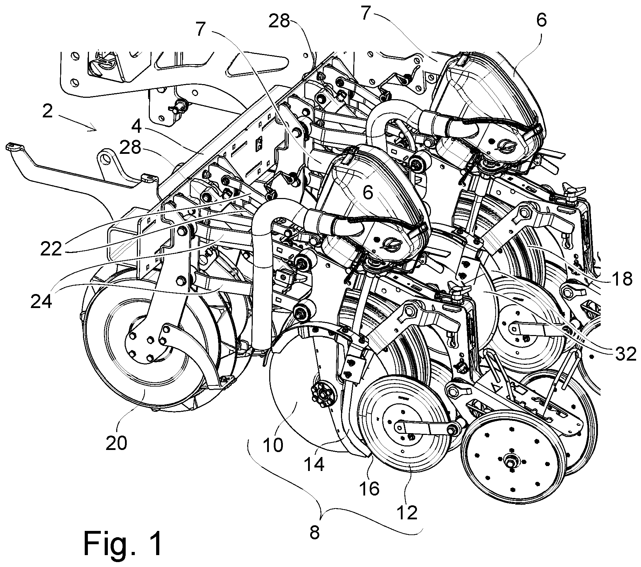

In Fig. 1 ist eine Ansicht auf eine Sämaschine 2 aus einer Ansicht von schräg hinten gezeigt. Die Sämaschine 2 verfügt über einen Maschinenrahmen 4, an den mehrere Saatgutvereinzelungsvorrichtungen 6 angebunden sind, die jeweils einer Drilleinheit 8 zugeordnet sind. Die Drilleinheiten 8 bestehen zumindest aus einem Furchenöffner 10, einer Andruckelement 12 und einer Förderleitung 14, die die in der Saatgutvereinzelungsvorrichtung 6 vereinzelten Saatgutkörner aus der Abgabeöffnung 16 in die Säfurche leitet. Im gezeigten Ausführungsbeispiel bestehen die Furchenöffner 10 aus Doppelscheibenscharen 32, die in einer angewinkelten Stellung V-förmig zueinander gehalten sind und an ihrer Unterseite in den Ackerboden eintauchen, um dort eine Säfurche zu öffnen. Die Furchenöffner 10 können mit einer Tiefenführungsvorrichtung 18 verbunden sein, die im Ausführungsbeispiel aus einem Rad besteht, das zur Abtastung der Bodenkontur seitlich neben der Säfurche über den Ackerboden rollt. Im gezeigten Beispiel sind einer Tiefenführungsvorrichtung 18 beidseitig jeweils ein Furchenöffner 10 zugeordnet. Den Furchenöffnern 10 können zusätzlich noch Packerwalzen 20 oder andere Aggregate vorgeordnet sein, die den Boden für die Aussaat vorbereiten und gegebenenfalls noch Dünger in den Boden einbringen, bevor die Saatgutkörner in die Säfurche abgelegt werden. Im vorliegenden Beispiel werden durch die Ringe der Packerwalzen 20 Bodenrillen vorgeformt und vorverdichtet, in welche die Furchenöffner 10 die Endfurchenform zur Saatgutablage formen.

Die Saatgutvereinzelungsvorrichtung 6 ist über Lenkerarme 22 mit dem Maschinenrahmen 4 verbunden, während die Drilleinheit 8 mit dem Furchenöffner 10 und dem Andruckelement 12 über Lenkerarme 24 mit dem Maschinenrahmen 4 verbunden ist. Die Auf- und Abbewegungen des Furchenöffners 10 können durch den Energiespeicher 28 gedämpft werden. Die Saatgutvereinzelungsvorrichtung 6 und die Drilleinheit 8 mit dem Furchenöffner 10 und dem Andruckelement 12 sind also unabhängig voneinander in vertikaler Richtung beweglich, so dass die Förderleitung 14 unterschiedlich große Abstände mit der Länge L überbrücken muss, wenn die Abgabeöffnung 16 die Saatgutkörner auf einen zumindest annähernd gleichbleibenden Punkt vor, an oder auf dem Andruckelement 12 abfördern soll.

Die Saatgutvereinzelungseinrichtung 6 ist mit einer Einlassöffnung 7 zur Zufuhr von Saatgut und/oder dem Aufbau eines pneumatischen Druckgefälles versehen. Mittels eines nicht dargestellten Gebläses oder Verdichters wird ein Druckgefälle zur Kornvereinzelung und Unterstützung des Transportes der Saatgutkörner erzeugt.

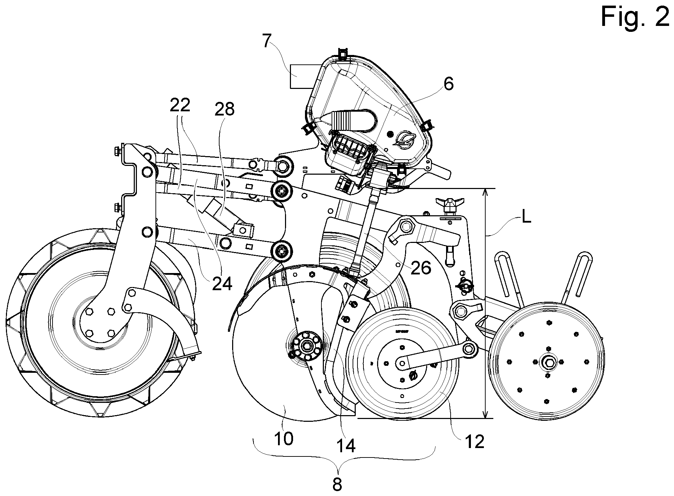

Fig. 2 zeigt eine Seitenansicht auf eine Förderleitung 14 mit einem elastischen Abschnitt 26, bei dem der Abstand, dargestellt durch die Länge L der Förderleitung, zwischen der Saatgutvereinzelungsvorrichtung 6 und der Drilleinheit 8 größer ist. In dieser Ansicht ist der Abschnitt 26 erkennbar, der aus einem elastischen Material hergestellt ist. Der Abschnitt 26 ist geradegestreckt und langgezogen.

Die Förderleitung 14 weist an ihrem unteren Ende einen gekrümmten Abschnitt auf, in dem die Saatgutkörner von einer annähernd vertikal nach unten gerichteten Förderrichtung in eine entgegen der Fahrtrichtung gerichtete Richtung auf das Andruckelement 12 zu umgelenkt werden. Der gekrümmte Abschnitt ist mit einer verlängerten Konsole des Furchenöffners 10 verbunden.

Mittels des pneumatischen Druckgefälles, welches durch die Einlassöffnung 7 in der Saatgutdosiervorrichtung 6 aufgebaut wird, entsteht eine durch einen Luftstrom beschleunigte Kornabgabe aus der Saatgutdosiervorrichtung 6 in die Förderleitung 14.

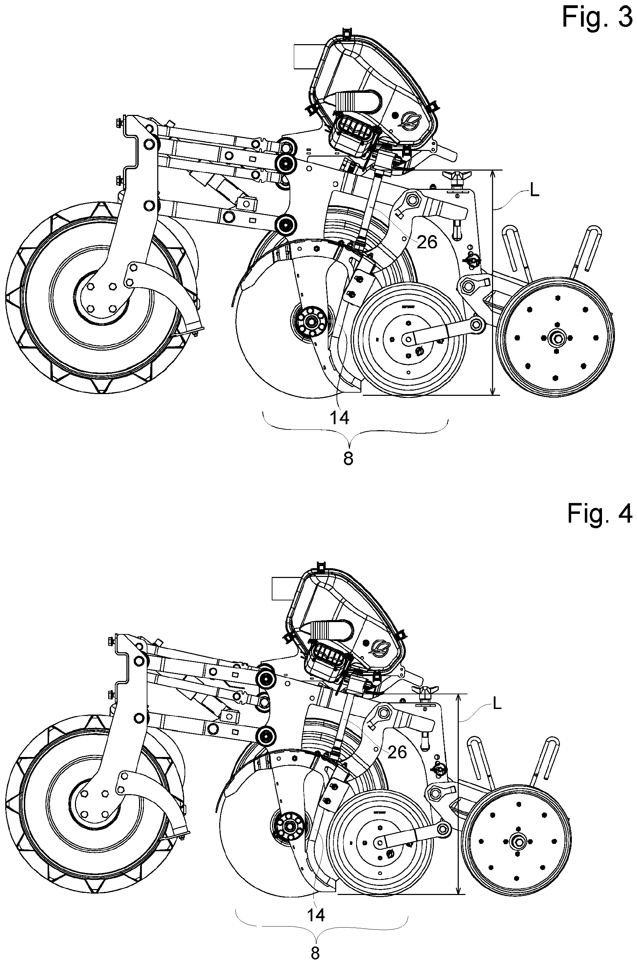

In Fig. 3 ist eine Seitenansicht auf eine Förderleitung 14 mit dem elastischen Abschnitt 26 gezeigt, bei dem der Abstand zwischen Saatgutvereinzelungsvorrichtung 6 und der Drilleinheit 8 in einem mittleren Bereich liegt. Gegenüber der Darstellung in Fig. 2 ist die Länge L der Förderleitung 14 verkürzt, wobei die Verkürzung voll durch den Abschnitt 26 kompensiert ist. Der Abschnitt 26 hat in gezeigten Ausführungsbeispiel nun eine weniger gestreckte Form, weil sich die Polymerketten des elastischen Wandungsmaterials nach Wegfall zumindest eines Teils der Zugkraft, die noch auf den Abschnitt 26 in der in Fig. 2 gezeigten Darstellung einwirkte, aus der gedehnten Orientierung wieder der statistisch begründeten Gauß-Verteilung in einem verdrillten Polymerknäuel angenähert haben.

Die Fig. 4 zeigt eine Seitenansicht auf die Förderleitung 14 mit dem elastischen Abschnitt 26, bei dem der Abstand zwischen der Saatgutvereinzelungsvorrichtung 6 und der Drilleinheit 8 klein ist. Die Länge L der Förderleitung 14 hat hier die kürzeste Erstreckung. Der elastische Abschnitt 26 ist hier durch die weitere Annäherung der Polymerketten des elastischen Materials an die statistisch begründete Gauß-Verteilung kaum noch oder gar nicht mehr gestreckt.

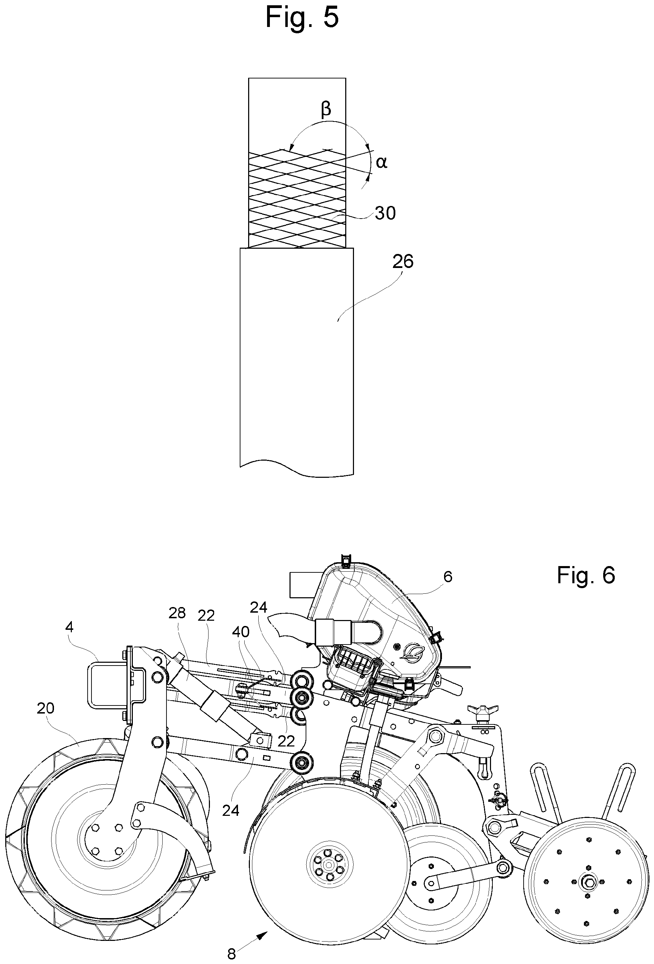

Die Figur 5 zeigt den teilweise freigestellten, elastischen Abschnitt 26 der Förderleitung mit einer Gewebelage 30 im neutralen, ungestreckten Zustand mit sich kreuzenden Fasern. Die sich kreuzenden Fasern bilden dabei Rautenformen mit in Umfangsrichtung der Förderleitung (quer) spitzen Überschneidungswinkeln α und in Dehnrichtung (längs) der Förderleitung stumpfen Überschneidungswinkeln β. Durch diese Faseranordnung wird eine hohe Längendehnbarkeit bei gleichzeitig geringer Querkontraktion des elastischen Abschnittes 26 erreicht. Die Gewebeeinlage des elastischen Abschnittes 26 kann, wie dargestellt, in ein Elastomer- oder Gummimaterial eingebettet oder aufgelegt sein als auch bei entsprechend feiner Faserstruktur allein den elastischen Abschnitt 26 bilden.

Wie bereits in Figur 1 und 2 beschrieben, zeigt Figur 6 die beiden Lenkerarm 24, welche in vertikaler Richtung schwenkbar am Rahmen 4 angeordnet sind und die Drilleinheit 8 relativ zum Rahmen 4 führen. Mit einem Energiespeicher 28, hier als Hydraulikzylinder ausgeführt, kann die Drilleinheit mit einer vertikalen Kraft beaufschlagt werden, um eine verbesserte Furchenbildung zu gewährleisten. Unabhängig von der Drilleinheit 8 ist die Saatgutvereinzelungsvorrichtung 6 ebenfalls über zwei Lenkerarm 22 am Rahmen 4 in vertikaler Richtung schwenkbar befestigt. Zwischen zumindest einem Lenkerarm 22 der Saatgutvereinzelungsvorrichtung 6 und einem Lenkerarm 24 der Drilleinheit 8 sind ein oder mehrere Feder/Dämpferelemente 40 angeordnet, welche Schwingungen, welche bei Bodenkontakt der Drilleinheit 8 auftreten, in Richtung der Saatgutvereinzelungsvorrichtung 6 abfedern und/oder dämpfen. Ebenso können eines oder mehrere Feder/Dämpferelemente 40 auch direkt zwischen der Saatgutvereinzelungsvorrichtung 6 und der Drilleinheit 8 alternativ oder zusätzlich zur Darstellung in Figur 6 angeordnet werden. Vorliegend sind zwei Blattfedern als Feder/Dämpferelemente 40 an einem Bild der beiden Lenkerarm 24 befestigt und gleiten an einem Anschlag, welcher den jeweiligen Lenkerarmn 22 zugeordnet ist, bei einer Relativbewegung der Lenkerarm 22 zu den Lenkerarmn 24 vorbei und verformen sich entsprechend der Relativbewegung. Durch die Verformung entsteht eine entsprechende Federkraft, welche auf die Lenkerarm einwirkt. Die Gleitbewegung bewirkt eine Dämpfungskomponente. Durch eine jeweilige Federvorspannung bzw. Federrate können die Kräfteverhältnisse zwischen den beiden Lenkerarmn 22 und 24 beeinflusst werden. Anstelle von Blattfedern sind weitere Biege- oder Spiralfedern als auch hydraulische und/oder pneumatisch wirkende Feder/Dämpferelemente einsetzbar.

Die Erfindung ist nicht auf die vorstehenden Ausführungsbeispiele, sondern durch den Gegenstand der nachfolgenden Ansprüche beschränkt.

### Bezugszeichenliste

- 2: Sämaschine
- 4: Maschinenrahmen
- 6: Saatgutvereinzelungsvorrichtung
- 7: Einlassöffnung
- 8: Drilleinheit
- 10: Furchenöffner
- 12: Andruckelement
- 14: Förderleitung
- 16: Abgabeöffnung
- 18: Tiefenführungsvorrichtung
- 20: Packerwalze
- 22: Lenkerarm (Andruckelement)
- 24: Lenkerarm (Furchenöffner)
- 26: elastischer Abschnitt
- 28: Energiespeicher
- 30: Gewebelage
- 32: Scheibenschar

## Patentansprüche

1. Landwirtschaftliche Sämaschine (2) mit einem Maschinenrahmen (4) und einer Mehrzahl von nebeneinander beweglich am Maschinenrahmen (4) angeordneten Drilleinheiten (8) und Saatgutvereinzelungsvorrichtungen (6), wobei die Drilleinheiten (8) zumindest einen Furchenöffner (10), eine Förderleitung (14) zur Beförderung des Saatguts von der Saatgutvereinzelungsvorrichtung (6) zu einer Ablagezone mit einer bodennah angeordneten Abgabeöffnung (16) und ein Andruckelement (12) aufweisen, der zumindest eine Furchenöffner (10), die Abgabeöffnung (16) und das Andruckelement (12) in dieser Arbeitsabfolge zueinander in der Drilleinheit (8) angeordnet sind und die Saatgutvereinzelungsvorrichtung (6) ohne eine mechanisch-starre Verbindung mit einem Bauteil einer Drilleinheit (8) beweglich mit dem Maschinenrahmen (4) verbunden ist, wobei die Saatgutvereinzelungseinrichtung (6) über zumindest ein Dosierelement verfügt, welches das Saatgut mittels eines pneumatischen Druckgefälles dosiert oder vereinzelt, und mittels des pneumatischen Druckgefälles, welches durch eine Einlassöffnung (7) in der Saatgutdosiervorrichtung (6) aufgebaut wird, eine durch einen Luftstrom beschleunigte Kornabgabe aus der Saatgutdosiervorrichtung (6) in die Förderleitung (14) bewirkt, und wobei die Förderleitung (14) zwischen der Saatgutvereinzelungsvorrichtung (6) und der Abgabeöffnung (16) längenveränderlich ausgebildet ist, indem die Förderleitung (14) zumindest in einem Abschnitt (26) aus einem elastischen Material hergestellt ist, welcher eine Schlauchform aufweist und zumindest teilweise aus einem Gewebematerial besteht

2. Sämaschine (2) nach Anspruch 1, **dadurch gekennzeichnet, dass** die Innenoberfläche des aus einem elastischen Material hergestellten Abschnitts (26) durch Materialfaltungen und/oder Welligkeiten unterbrechungsfrei ausgestaltet ist.

3. Sämaschine (2) nach Anspruch 1 oder 2, **dadurch gekennzeichnet, dass** der aus einem elastischen Material hergestellte Abschnitt (26) über seine Länge hinweg eine zumindest annähernd gleichbleibende Querschnittsform des Innenraums aufweist.

4. Sämaschine (2) nach Anspruch 1 oder 2, **dadurch gekennzeichnet, dass** das Verhältnis einer Veränderung des Durchmessers des schlauchförmigen Abschnitts zur Veränderung einer Länge des schlauchförmigen Abschnitts bei seiner Dehnung maximal 20 Prozent, vorzugsweise kleiner 10 Prozent beträgt.

5. Sämaschine (2) nach einem der vorgehenden Ansprüche, **dadurch gekennzeichnet, dass** der aus einem elastischen Material hergestellte Abschnitt (26) zu den benachbarten Bereichen der Förderleitung (14) mit seiner Querschnittsform des Innenraums vorzugsweise in Förderrichtung einen zumindest annähernd oder genau versatzfreien Übergang aufweist.

6. Sämaschine (2) nach einem der vorgehenden Ansprüche, **dadurch gekennzeichnet, dass** die Förderleitung (14) zumindest in dem Abschnitt (26) biegsam ausgebildet ist.

7. Sämaschine (2) nach Anspruch 6, **dadurch gekennzeichnet, dass** die Förderleitung (14) zumindest in dem Abschnitt (26) innerhalb einer Biegeebene, welche parallel zu einer Bewegungsebene der Drilleinheit (8) zum Maschinenrahmen (4) steht, biegsam ausgebildet ist.

8. Sämaschine (2) nach einem der vorhergehenden Ansprüche, **dadurch gekennzeichnet, dass** der aus einem elastischen Material hergestellte schlauchförmige Abschnitt (26) der Förderleitung (14) im eingebauten Zustand einer Vorspannung in einer Dehnrichtung unterliegt.

9. Sämaschine (2) nach einem der vorhergehenden Ansprüche, **dadurch gekennzeichnet, dass** die Förderleitung (14) in ihrem Verlauf auf den Innenoberflächen Erhebungen und/oder Vertiefungen aufweist, die im Wandungsbereich im Luftstrom turbulente Strömungen erzeugen.

10. Sämaschine (2) nach einem der vorhergehenden Ansprüche, **dadurch gekennzeichnet, dass** die Förderleitung (14) an ihrer dem Boden zugewandten Hälfte mit der beweglichen Lagerung des Furchenöffners (10) verbunden ist.

11. Sämaschine (2) nach einem der vorhergehenden Ansprüche, **dadurch gekennzeichnet, dass** die Saatgutvereinzelungsvorrichtung (6) über ein Feder- und/oder Dämpferelement mit der Drilleinheit (8) gekoppelt ist.

12. Sämaschine (2) nach einem der vorhergehenden Ansprüche, **dadurch gekennzeichnet, dass** die Saatgutvereinzelungsvorrichtung (6) über ein Feder- und/oder Dämpferelement mit dem Maschinenrahmen (4) gekoppelt ist.

13. Sämaschine (2) nach einem der vorhergehenden Ansprüche, **dadurch gekennzeichnet, dass** als Furchenöffner (10) ein drehendes Scheibensäschar oder eine paarweise Anordnung von zwei Scheibensäscharen verwendet ist.

14. Sämaschine (2) nach einem der vorhergehenden Ansprüche, **dadurch gekennzeichnet, dass** die Abgabeöffnung (16) der Förderleitung (14) in einem Scharfuß mündet.

15. Sämaschine (2) nach einem der vorhergehenden Ansprüche, **dadurch gekennzeichnet, dass** die Förderleitung (14) Rohrabschnitte aufweist, die in zumindest einem Abschnitt teleskopartig ineinander beweglich ausgebildet sind.

16. Sämaschine (2) nach Anspruch 13 und 15, **dadurch gekennzeichnet, dass** sich der ineinander bewegliche Abschnitt der Teleskoprohre aus der Seitenansicht der Sämaschine (2) vollständig innerhalb des Kreisumfangs von Scheibenscharen befindet oder teilweise über diesen herausragt.

## Claims

1. An agricultural seeding machine (2) having a machine frame (4) and a plurality of drill units (8) and seed singulation devices (6) moveably arranged on the machine frame (4) next to one another, wherein the drill units (8) comprise at least one furrow opener (10), a conveying line (14) for conveying the seed from the seed singulation device (6) to a planting zone with an output opening (16) arranged near the ground and a pressure element (12), the at least one furrow opener (10), the output opening (16) and the pressure element (12) are arranged in the drill unit (8) in this work sequence relative to one another, and the seed singulation device (6) is moveably connected to the machine frame (4) without a mechanically rigid connection to a component of a drill unit (8), wherein the seed singulation device (6) has at least one metering element, which meters or singulates the seed by means of a pneumatic pressure drop, and by means of the pneumatic pressure drop, which is established through an inlet opening (7) in the seed metering device (6), brings about a grain output from the seed metering device (6) into the conveying line (14) that is accelerated by an air flow, and wherein the conveying line (14) is designed so as to be variable in length between the seed singulation device (6) and the output opening (16), in that the conveying line (14), at least in a portion (26), is produced from an elastic material, which has a tubular form and consists at least partly of a fabric material.

2. The seeding machine (2) according to Claim 1, **characterised in that** the inner surface of the portion (26) produced from an elastic material is configured free of interruptions through material folds and/or undulations.

3. The seeding machine (2) according to Claim 1 or 2, **characterised in that** the portion (26) produced from an elastic material has, over its length, an at least approximately same cross-sectional shape of the interior.

4. The seeding machine (2) according to Claim 1 or 2, **characterised in that** the ratio of a change of the diameter of the tubular portion to the change of a length of the tubular portion when stretched amounts to maximally 20 percent, preferentially less than 10 percent.

5. The seeding machine (2) according to any one of the preceding claims, **characterised in that** the portion (26) produced from the elastic material to the neighbouring regions of the conveying line (14) with its cross-sectional shape of the interior preferentially comprises an at least approximately or exactly offset-free transition in the conveying direction.

6. The seeding machine (2) according to any one of the preceding claims, **characterised in that** the conveying line (14) is configured so as to be flexible at least in the portion (26).

7. The seeding machine (2) according to Claim 6, **characterised in that** the conveying line (14) is designed so as to be flexible at least in the portion (26) within a bending plane, which is parallel to a movement plane of the drill unit (8) to the machine frame (4).

8. The seeding machine (2) according to any one of the preceding claims, **characterised in that** the tubular portion (26) of the conveying line (14) produced from an elastic material is subject to a preload in a stretch direction in the installed state.

9. The seeding machine (2) according to any one of the preceding claims, **characterised in that** the conveying line (14) over its course on the inner surfaces comprises elevations and/or indentations, which in the wall region generate turbulent air flows.

10. The seeding machine (2) according to any one of the preceding claims, **characterised in that** the conveying line (14) on its half facing the ground is connected to the moveable mounting of the furrow opener (10).

11. The seeding machine (2) according to any one of the preceding claims, **characterised in that** the seed singulation device (6) is coupled to the drill unit (8) via a spring and/or damper element.

12. The seeding machine (2) according to any one of the preceding claims, **characterised in that** the seed singulation device (6) is coupled to the machine frame (4) via a spring and/or damper element.

13. The seeding machine (2) according to any one of the preceding claims, **characterised in that** as furrow opener (10) a rotating disc sowing coulter or an arrangement in pairs of two disc sowing coulters is used.

14. The seeding machine (2) according to any one of the preceding claims, **characterised in that** the output opening (16) of the conveying line (14) terminates in a coulter foot.

15. The seeding machine (2) according to any one of the preceding claims, **characterised in that** the conveying device (14) comprises pipe sections, which in at least one portion are configured so as to be moveably within one another telescope-like.

16. The seeding machine (2) according to Claims 13 and 15, **characterised in that** the portion of the telescopic pipes that is moveable within one another, from the lateral view of the seeding machine (2), is located completely within the circular circumference of disc coulters or partially protrudes over the same.

## Revendications

1. Semoir agricole (2), pourvu d'un châssis de machine (4) et d'une pluralité d'unités de semoir (8) et de dispositifs de séparation (6) des semences, placés côte à côte de manière déplaçable sur le châssis de machine (4), les unités de semoir (8) comportant au moins un traceur de sillons (10), un conduit de convoyage (14) destiné à convoyer les semences du dispositif de séparation (6) des semences vers une zone de dépose pourvue d'un orifice de distribution (16) placé à proximité du sol et un élément presseur (12), l'au moins un traceur de sillons (10), l'orifice de distribution (16) l'élément presseur (12) étant placés les uns par rapport aux autres selon cette séquence de travail dans l'unité de semoir (8) et le dispositif de séparation (6) des semences étant assemblé sans assemblage mécanique rigide avec un composant d'une unité de semoir (8), de manière déplaçable avec le châssis de machine (4), le dispositif de séparation (6) des semences disposant d'au moins un élément de dosage, lequel dose ou sépare les semences au moyen d'une différence de pression pneumatique, et au moyen de la différence de pression pneumatique, laquelle est établie par un orifice d'entrée (7) dans le dispositif de dosage (6) des semences, provoque une distribution des graines, accélérée par un flux d'air, du dispositif de dosage (6) des semences dans le conduit de convoyage (14) et le conduit de convoyage (14) étant conçu à longueur variable entre le dispositif de séparation (6) des semences et l'orifice de distribution (16) en ce que le conduit de convoyage (14) est fabriqué au moins dans un tronçon (26) en un matière élastique qui présente une forme tubulaire et ne consiste que partiellement dans une matière en tissu.

2. Semoir (2) selon la revendication 1, **caractérisé en ce que** la surface intérieure du tronçon (26) fabriqué en une matière élastique est conçue sans interruption par des plis de la matière et / ou des ondulations.

3. Semoir (2) selon la revendication 1 ou 2, **caractérisé en ce que** le tronçon (26) fabriqué en une matière élastique présente sur sa longueur une forme de section transversale approximativement constante de l'espace intérieur.

4. Semoir (2) selon la revendication 1 ou 2, **caractérisé en ce que** le rapport d'une variation du diamètre du tronçon tubulaire à la variation d'une longueur du tronçon lors de son allongement est d'un maximum de 20 pour cent, est inférieur de préférence à 10 pour cent.

5. Semoir (2) selon l'une quelconque des revendications précédentes, **caractérisé en ce que** le tronçon (26) fabriqué en une matière élastique comporte par la forme de sa section transversale, de préférence dans la direction de convoyage un passage vers les zones voisines du conduit de convoyage (14) au moins approximativement ou précisément sans décalage.

6. Semoir (2) selon l'une quelconque des revendications précédentes, **caractérisé en ce que** le conduit de convoyage (14) est conçu de manière flexible au moins dans le tronçon (26).

7. Semoir (2) selon la revendication 6, **caractérisé en ce que** le conduit de convoyage (14) est conçu de manière flexible au moins dans le tronçon (26) à l'intérieur d'un plan de flexion, lequel se trouve à la parallèle d'un plan de déplacement de l'unité de semoir (8) par rapport au châssis de machine (4).

8. Semoir (2) selon l'une quelconque des revendications précédentes, **caractérisé en ce que** lorsqu'il est monté, le tronçon (26) de forme tubulaire fabriqué en une matière élastique du conduit de convoyage (14) est soumis à une précontrainte dans la direction d'allongement.

9. Semoir (2) selon l'une quelconque des revendications précédentes, **caractérisé en ce que** sur son trajet sur les surfaces intérieures, le conduit de convoyage (14) comporte des élévations et / ou des creux, qui dans la zone de la paroi, génèrent dans le flux d'air des courants turbulents.

10. Semoir (2) selon l'une quelconque des revendications précédentes, **caractérisé en ce que** sur sa moitié qui fait face au fond inférieur, le conduit de convoyage (14) est assemblé avec le logement déplaçable du traceur de sillons (10).

11. Semoir (2) selon l'une quelconque des revendications précédentes, **caractérisé en ce que** le dispositif de séparation (6) des semences est accouplé par l'intermédiaire d'un élément à ressort et / ou d'un élément amortisseur avec l'unité de semoir (8).

12. Semoir (2) selon l'une quelconque des revendications précédentes, **caractérisé en ce que** le dispositif de séparation (6) des semences est accouplé par l'intermédiaire d'un élément à ressort et / ou d'un élément amortisseur avec le châssis de machine (4).

13. Semoir (2) selon l'une quelconque des revendications précédentes, **caractérisé en ce qu'**il est utilisé en tant que traceur de sillons (10) un soc à disques rotatif ou un agencement par paire de deux socs à disques.

14. Semoir (2) selon l'une quelconque des revendications précédentes, **caractérisé en ce que** l'orifice de distribution (16) du conduit de convoyage (14) débouche dans un pied de soc.

15. Semoir (2) selon l'une quelconque des revendications précédentes, **caractérisé en ce que** le conduit de convoyage (14) comporte des tronçons tubulaires, qui dans au moins un tronçon sont conçus en étant déplaçables les uns dans les autres de manière télescopique.

16. Semoir (2) selon la revendication 13 et 15, **caractérisé en ce qu'**en vue latérale du semoir (2), le tronçon déplaçable dans les autres des tubes télescopiques se trouve totalement à l'intérieur de la circonférence de cercle de socs à disques rotatifs ou saillit partiellement au-delà de celle-ci.
